# EUROPÄISCHE PATENTSCHRIFT

(11) **EP 3 266 549 B1**
(45) Veröffentlichungstag und Bekanntmachung des Hinweises auf die Patenterteilung: **12.02.2020**
(21) Anmeldenummer: 17179698.0
(22) Anmeldetag: 05.07.2017
(51) Int. Cl.: B23K 9/08, B23K 9/20, B23K 35/02

(54) **SCHWEISSVERFAHREN NACH DEM PRINZIP DER HUBZÜNDUNG UNTER VERWENDUNG EINES MAGNETISCH BEWEGTEN LICHTBOGENS, SOWIE SCHWEISSELEMENT**
WELDING METHOD OPERATING ACCORDING TO THE PRINCIPLE OF ARC IGNITION USING A MAGNETICALLY IMPELLED ARC, AND WELDING ELEMENT
PROCÉDÉ DE SOUDAGE SELON LE PRINCIPE DE L'ARC TIRÉ À L'AIDE D'UN FAISCEAU DE LUMIÈRE À DÉPLACEMENT MAGNÉTIQUE ET ÉLÉMENT DE SOUDURE

(30) Priorität: 08.07.2016 DE 102016212495
(43) Veröffentlichungstag der Anmeldung: 10.01.2018
(73) Patentinhaber: Bolzenschweißtechnik Heinz Soyer GmbH, 82237 Wörthsee (DE)
(72) Erfinder: Soyer Senior, Heinz, 82234 Weßling (DE); Soyer Junior, Heinz, 82319 Starnberg-Perchting (DE)
(74) Vertreter: Thun, Clemens

(56) Entgegenhaltungen:
- DE-A1-102006 050 093
- DE-B3-102009 044 495
- DE-B4-102004 051 389
- DE-U1- 20 019 602
- US-A- 2 441 257
- US-A- 3 760 143

## Beschreibung

Die Erfindung betrifft ein Verfahren zur Durchführung eines Schweißvorgangs zum Verschweißen eines Schweißelements mit einem Trägerelement nach dem Prinzip der Hubzündung unter Verwendung eines magnetisch bewegten Lichtbogens, und ein Schweißelement gemäß dem Oberbegriff der Ansprüche 1 und 11 (siehe z.B. DE 10 2006 050 093 A1).

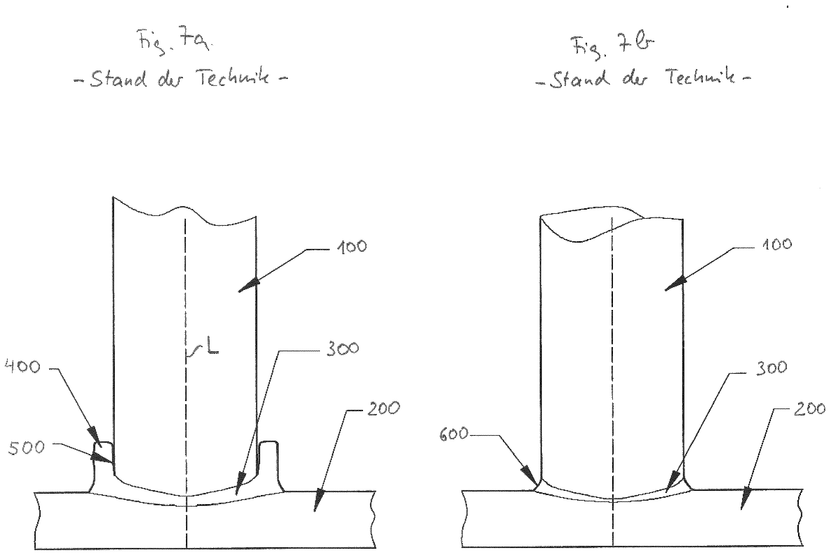

Das Bolzenschweißen wird in der Industrie seit dem Jahr 1960 insbesondere in Form des so genannten Hubzündungsschweißens mit Keramikring in großem Umfang angewendet. Das Schweißen nach dem Prinzip der Hubzündung ist an sich bekannt; ein in Fig. 7a beispielhaft angedeutetes Schweißelement in Form eines Schweißbolzens 100 wird hierbei zunächst entlang seiner Längsachse L, also senkrecht zu der Oberfläche eines Werkstoffs bzw. Trägerelements 200 mit seiner Stirnseite angesetzt und anschließend unter Stromfluss um einen bestimmten Hub von der Oberfläche abgehoben, wobei ein Lichtbogen zwischen dem Schweißbolzen 100 und dem Trägerelement 200 zündet. Durch den Lichtbogen schmelzen dann der stirnseitige Endbereich des Schweißbolzens 100 und der gegenüberliegende Bereich des Trägerelements 200, so dass zwei Schmelzen entstehen. Nach Ablauf der Schweißzeit wird der Schweißbolzen 100 entlang seiner Längsachse L in einem Eintauchvorgang wieder auf das Trägerelement 200 zu bewegt, die Schmelzen verbinden sich, der Lichtbogen erlischt und die Schmelze erstarrt, wodurch ein Schweißverbindungsbereich 300 mit einer Schweißnaht bzw. einem Wulst 400 gebildet wird. Ein gegebenenfalls um den Schweißbolzen 100 angeordneter Keramikring kann nach Erstarren der Schmelze entfernt werden.

Aufgrund der verwendeten Gerätetechnik im Bereich von Stromquellen und Schweißpistolen sowie störender Nebeneffekte wie Tropfenkurzschluss und Blaswirkung am Lichtbogen wird bei diesem Verfahren bis heute mit einem großen Überschuss an geschmolzenem Material seitens der Bolzen und seitens der Trägerelemente gearbeitet.

Wie in Fig. 7a schematisch skizziert, wird beim Eintauchvorgang des Schweißbolzens 100 ein großer Teil der Schmelze in den Spalt zwischen dem Keramikring (in der Figur nicht gezeigt) und dem Schaft des Schweißbolzens 100 verdrängt. Oberhalb der Schmelzzone ist der Schaft nicht geschmolzen. Aus diesem Grund formt sich hier die Schmelze an den Schaft. Im weiteren Verlauf kühlt die Schmelze sehr schnell ab und erstarrt, ohne dass sich in diesem Bereich eine mechanisch belastbare Verbindung zwischen dem erstarrten Material und dem Schaft ausbildet. Es entsteht hier vielmehr eine dauerhafte Kerbe 500, die insbesondere bei einer schwingenden Belastung zum Ausgangspunkt eines Kerbbruchs werden kann.

Wird die Schweißung demgegenüber so durchgeführt, dass sich eine geringere Menge an Schmelze bildet, wird die Wahrscheinlichkeit größer, dass der Schweißbolzen 100 - insbesondere verursacht durch Blaswirkung - nicht vollflächig an das Trägerelement 200 angeschlossen wird und die Schweißverbindung somit fehlerhaft ist.

An diesem Verfahren wurden seit 40 Jahren keine nennenswerten Veränderungen vorgenommen. Die Schweißung erfolgt also mit einem großen Überschuss an Schmelze. Bei einer Durchführung einer solchen Schweißung in einer Seitposition oder über Kopf führt dies zu zusätzlichen Problemen und zu erheblichen Einschränkungen bei der Anwendung.

Beim Hubzündungsschweißen mit Schutzgas wird der Schweißbereich durch ein von außen zugeführtes Schutzgas abgeschirmt. Das Schutzgas beeinflusst insbesondere den Lichtbogen und wirkt auf das Schmelzverhalten des Schweißbolzens 100 und des Trägerelements 200. Dabei können - wie in Fig. 7b schematisch skizziert - unter Laborbedingungen sehr gute Ergebnisse erzielt werden, wobei sich vorteilhaft eine umlaufende Kehlnaht 600 zwischen dem Schweißbolzen 100 und dem Trägerelement 200 bildet. In der Praxis kommt es hierbei jedoch häufig insbesondere aufgrund von Blaswirkung bei größeren Bauteilen zu einem einseitigen Brennen des Lichtbogens und einer ungleichmäßigen Verteilung der Schmelze. Hinterschnitte und eine ungleichmäßige Verteilung des erstarrten Materials im Schweißwulst um den Bolzen sind die Folge. Dadurch ist hier auch die Streuung der Festigkeit von verschweißten Bolzen bei der Prüfung nach DIN-ISO 14555 erheblich. Sonderverfahren, wie das Schweißen mit sehr kurzer Schweißzeit und sehr hohem Schweißstrom können den genannten Mangel allenfalls teilweise beheben, denn auch hierbei bildet sich bei größerer Schmelzmenge keine tragende Verbindung zwischen dem oberen Bereich des Schweißwulstes und dem Schaft des Schweißbolzens.

Ein Schweißverfahren nach dem Prinzip der Hubzündung mit magnetisch bewegtem Lichtbogen ist aus der Schrift DE 10 2004 051 389 B4 bekannt. Hierbei wird an der Schweißstelle ein Magnetfeld erzeugt, durch das der Lichtbogen abgelenkt wird, so dass er sich mit Bezug auf die Längsachse des Schweißelements ausgehend vom Zentrum spiralförmig nach außen bewegt. Wie in der genannten Schrift angegeben, lassen sich beim Schweißen unter Nutzung eines magnetisch bewegten Lichtbogens und unter Schutzgas auch vollflächige Verschweißungen ausführen. Insbesondere, wenn Bolzen mit einer sehr flachen Stirnfläche verwendet werden, können dabei Schweißungen ohne Tropfenkurzschluss mit vollflächiger Verschweißung bei sehr geringem Schmelzvolumen erzielt werden.

Aus der DE 10 2006 050 093 A1 ist ein Schweißverfahren mit magnetisch bewegtem Lichtbogen bekannt, bei dem ein Schweißelement verwendet wird, das einen Flanschbereich mit einer konischen Stirnfläche aufweist.

Aus der US 2,441,257 ist ein Schweißelement bekannt, bei dem der vordere Endbereich einen kegelstumpfförmigen Bereich aufweist, an dessen Deckfläche ein metallener Schaft hervorragt. Weitere Schweißelemente zeigen die Schriften DE 200 19 602 U1 und DE 10 2009 044 495 B3 sowie die US 3,760,143.

Der Erfindung liegt die Aufgabe zugrunde, ein entsprechendes verbessertes Schweißverfahren anzugeben; insbesondere soll das Verfahren mit einem besonders geringen Schweißstrom ausführbar sein. Auch soll das Verfahren vorteilhaft sein mit Bezug auf eine hohe Reproduzierbarkeit und eine Anwendung bei unterschiedlichen Schweißpositionen. Außerdem soll ein entsprechendes Schweißelement angegeben werden.

Diese Aufgabe wird gemäß der Erfindung mit den in den unabhängigen Ansprüchen 1 und 11 genannten Gegenständen gelöst. Besondere Ausführungsarten der Erfindung sind in den abhängigen Ansprüchen angegeben.

Gemäß der Erfindung ist ein Verfahren zur Durchführung eines Schweißvorgangs zum Verschweißen eines Schweißelements mit einem Trägerelement nach dem Prinzip der Hubzündung unter Verwendung eines, durch Erzeugen eines Magnetfelds bewegten Lichtbogens vorgesehen. Dabei weist das Schweißelement einen Schweißbereich auf, der einen ringförmigen Randbereich umfasst, sowie einen, von dem Randbereich umgrenzten und gegenüber dem Randbereich strukturell abgegrenzt und erhaben gestalteten Kernbereich. Das Verfahren umfasst die folgenden Schritte: (i) Erzeugen des Lichtbogens zwischen dem Kernbereich und dem Trägerelement, (ii) Schmelzen zumindest eines überwiegenden Teils des Kernbereichs, (iii) Bewegen des Lichtbogens mit Hilfe des Magnetfelds auf den Randbereich und (iv) Schmelzen zumindest eines Teils des Randbereichs.

Der Kernbereich eignet sich besonders als Quelle des Schmelzmaterials. Dabei lässt sich durch den Kernbereich insbesondere auf die Menge der Schmelze Einfluss nehmen. Somit lässt sich erzielen, dass die Schweißverbindung unter Nutzung einer besonders geringen Menge an Schmelze hergestellt wird. Demzufolge lässt sich der Schweißvorgang mit einem besonders geringen Schweißstrom durchführen. Im Vergleich zu einem Verfahren nach dem Stand der Technik lässt sich eine entsprechende Schweißverbindung unter Nutzung eines um 50% verringerten Schweißstroms bewirken. Dies ist auch vorteilhaft mit Bezug auf eine entsprechende Schweißvorrichtung, denn Letztere eignet sich auf diese Weise beispielsweise besser für eine Ausgestaltung mit einem internen Energiespeicher. Zudem lässt sich hierdurch erzielen, dass sich zwischen dem Schweißelement und dem erstarrten Schmelzmaterial keine Kerbe bildet.

Vorzugsweise umfasst das Verfahren außerdem den weiteren Schritt: (v) Verbinden des Schweißelements mit dem Trägerelement durch eine Bewegung des Schweißelements entlang einer Längsachse des Schweißelements, wobei eine, durch die Schritte (ii) und (iv) gebildete Schmelze in Richtung der Längsachse betrachtet zumindest den Kernbereich überdeckt. So lässt sich durch die Schmelze ein Verbindungsbereich bilden, dessen Querschnittfläche besonders groß ist, insbesondere, wenn dabei die Schmelze auch zumindest einen überwiegenden Anteil des Randbereichs überdeckt. Dies ist insbesondere vorteilhaft mit Bezug auf die zu erreichende Belastbarkeit der Schweißverbindung.

Vorzugsweise umfasst das Verfahren außerdem den folgenden Schritt: (vi) Bilden eines umlaufenden konkav geformten Wulstes zwischen dem Schweißelement und dem Trägerelement. Hierdurch lässt sich eine besonders große Festigkeit, insbesondere bei dynamischer Belastung erzielen.

Besonders gute Ergebnisse lassen sich erzielen, wenn das Verfahren unter Zuführung eines Schutzgases durchgeführt wird.

Erfindungsgemäß weist der Kernbereich einen Durchmesser auf und der Randbereich einen Durchmesser, wobei der Durchmesser des Kernbereichs zwischen 60% und 95% des Durchmessers des Randbereichs beträgt. Dies ist vorteilhaft mit Bezug auf eine besonders geeignete Dimensionierung des Kernbereichs.

Vorzugsweise weist das Schweißelement einen, sich an den Schweißbereich anschließenden Schaftbereich auf, wobei ein Durchmesser des Schaftbereichs ebenso groß oder größer ist als der Durchmesser des Randbereichs. So lässt sich erzielen, dass der Verbindungsbereich kleiner ist als die entsprechende Querschnittfläche des Schweißelements.

Vorzugsweise weist der Kernbereich einen Stirnflächenbereich auf, der eine Kegelfläche beschreibt, deren Kegelwinkel vorzugsweise mindestens 175° beträgt. Dies ist insbesondere vorteilhaft mit Bezug auf die Vermeidung eines Tropfenkurzschlusses.

Vorzugsweise weist der Kernbereich eine Spitze zur zentrischen Zündung des Lichtbogens auf. So lässt sich ein Pilotlichtbogen für den Schweißvorgang besonders geeignet erzeugen.

Vorzugsweise ist der Randbereich radial nach außen durch eine Außenkante begrenzt, wobei sich der Kernbereich gegenüber einem, durch die Außenkante festgelegten Niveau um mehr als 0,5 mm erhaben gestaltet ist, vorzugsweise um mehr als 0,8 mm. Diese Gestaltung hat sich für das hier beschriebene Verfahren als besonders vorteilhaft erwiesen.

Vorzugsweise ist der Kernbereich ringförmig gestaltet. So lässt sich auch ein nicht vollflächiger Verbindungsbereich realisieren.

Gemäß einem weiteren Aspekt der Erfindung ist ein Schweißelement zur Durchführung eines Schweißvorgangs zum Verschweißen des Schweißelements mit einem Trägerelement nach dem Prinzip der Hubzündung unter Verwendung eines magnetisch bewegten Lichtbogens vorgesehen, insbesondere zur Durchführung eines anmeldungsgemäßen Verfahrens. Das Schweißelement weist dabei einen Schweißbereich mit einem ringförmigen Randbereich und einem, von dem Randbereich umgrenzten und gegenüber dem Randbereich strukturell abgegrenzt und erhaben gestalteten Kernbereich auf. Der Kernbereich weist erfindungsgemäß einen Durchmesser D1 auf und der Randbereich einen Durchmesser D2, wobei der Durchmesser des Kernbereichs zwischen 60% und 95% des Durchmessers des Randbereichs beträgt, und wobei ferner der Kernbereich einen Stirnflächenbereich aufweist, der eine Kegelfläche beschreibt, deren Kegelwinkel α mindestens 175° beträgt.

Vorzugsweise ist das Schweißelement dabei entsprechend den obigen Angaben gestaltet.

Die Erfindung wird im Folgenden anhand von Ausführungsbeispielen und mit Bezug auf die Zeichnungen näher erläutert. Es zeigen:
- Fig. 1: eine Skizze eines ersten Ausführungsbeispiels eines anmeldungsgemäßen Schweißelements in Form eines Gewindebolzens,
- Fig. 2: eine Skizze eines zweiten Ausführungsbeispiels eines anmeldungsgemäßen Schweißelements in Form eines Stifts,
- Fig. 3: eine Skizze eines dritten Ausführungsbeispiels eines anmeldungsgemäßen Schweißelements in Form einer Innengewindebuchse,
- Figuren 4a bis 4f: Skizzen zum Ablauf eines anmeldungsgemäßen Verfahrens anhand eines Verschweißens eines Gewindebolzens mit einem Trägerelement,
- Fig. 5: eine Skizze eines schematischen Schliffbilds einer Schweißverbindung gemäß einem anmeldungsgemäßen Verfahren,
- Figuren 6a bis 6d: Skizzen zum Ablauf eines anmeldungsgemäßen Verfahrens im Fall eines nicht-vollflächigen Schweißverbindungsbereichs,
- Fig. 7a: eine Skizze einer Schweißverbindung, erzielt mit einem Hubzündungsschweißverfahren nach dem Stand der Technik und
- Fig. 7b: eine Skizze einer Schweißverbindung, erzielt mit einem Hubzündungsschweißverfahren unter Nutzung eines Schutzgases nach dem Stand der Technik.

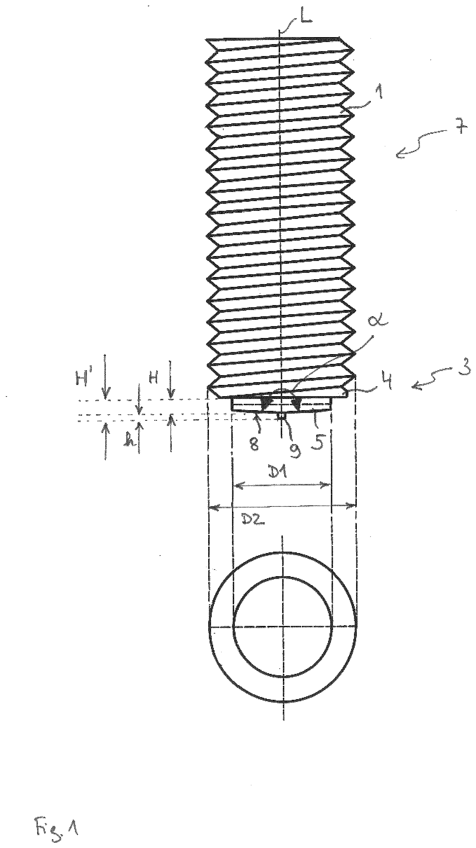

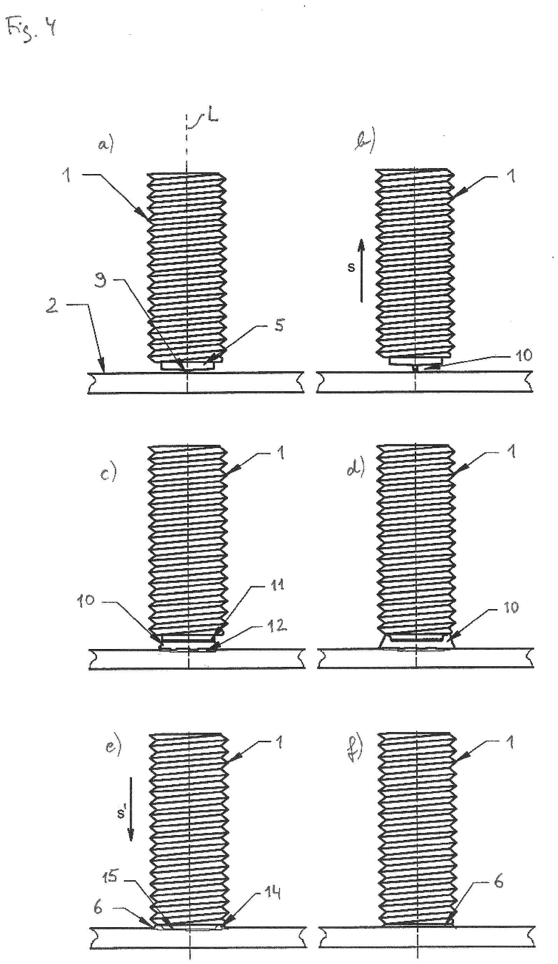

Fig. 1 zeigt eine schematische Seitenansicht eines anmeldungsgemäßen Schweißelements 1 gemäß einem ersten Ausführungsbeispiel in Form eines Gewindebolzens. Das Schweißelement 1 erstreckt sich entlang einer Längsachse L. Im unteren Teil der Figur sind zwei unterschiedliche Querschnittflächen des Schweißelements 1 normal zu der Längsachse L skizziert. Das Schweißelement 1 eignet sich für ein anmeldungsgemäßes Verfahren zur Durchführung eines Schweißvorgangs; in den Figuren 4a) bis 4f) sind beispielhaft Skizzen zu einem solchen Verfahren gezeigt.

Das Verfahren dient zum Verschweißen des Schweißelements 1 mit einem insbesondere metallenen Trägerelement 2, und zwar nach dem Prinzip der Hubzündung und unter Verwendung eines, durch Erzeugen eines Magnetfelds bewegten Lichtbogens. Wie eingangs dargelegt, ist dies als solches Stand der Technik, so dass im Folgenden im Wesentlichen auf die Besonderheiten eines anmeldungsgemäßen Verfahrens bzw. eines anmeldungsgemäßen Schweißelements 1 gegenüber dem erwähnten Stand der Technik eingegangen wird.

Das Schweißelement 1 weist einen Schweißbereich 3 auf, der einen ringförmigen Randbereich 4 umfasst, sowie einen, von dem Randbereich 4 umgrenzten und gegenüber dem Randbereich 4 strukturell abgegrenzt und erhaben gestalteten Kernbereich 5. Am Übergangsbereich zwischen dem Randbereich 4 und dem Kernbereich 5 ist also mit anderen Worten eine Stufe gebildet.

Das Verfahren umfasst dabei folgende Schritte:
(i) Erzeugen des Lichtbogens zwischen dem Kernbereich 5 und dem Trägerelement 2
(ii) Schmelzen zumindest eines überwiegenden Teils des Kernbereichs 5
(iii) Bewegen des Lichtbogens mit Hilfe des Magnetfelds auf den Randbereich 4 und
(v) Schmelzen zumindest eines Teils des Randbereichs 4.

Der Kernbereich 5 dient dabei als Hauptquelle des Schmelzmaterials der gesamten Schweißverbindung.

Vorzugsweise wird das Verfahren unter Zuführung eines Schutzgases durchgeführt. Dabei kann das Schutzgas wie an sich bekannt der Schweißstelle zugeführt werden. Das Verfahren kann unter Verwendung aller bisheriger Bolzenwerkstoffe mit einem dafür geeigneten Schutz- bzw. Prozessgas durchgeführt werden.

In Fig. 4a ist ein Zustand vor Zündung des Lichtbogens gezeigt, in dem das Schweißelement 1 mit seinem Kernbereich 5 auf dem Trägerelement 2 aufgesetzt ist. Das Schweißelement 1 ist dabei vorzugsweise mit seiner Längsachse L senkrecht zu der Oberfläche des Trägerelements 2 orientiert. Vorzugsweise weist der Kernbereich 5 eine Spitze 9 auf, die hierbei das Trägerelement 2 kontaktiert.

In Fig. 4b ist skizziert, wie das Schweißelement 1 entlang seiner Längsachse L ein Stück weit bzw. um einen Hub von dem Trägerelement 2 abgehoben wird, wie durch einen Pfeil s angedeutet - und ein Lichtbogen 10 zunächst in Form eines Pilotlichtbogens im Sinn des oben genannten Schritts (i) gezündet wird. Die Spitze 9 des Schweißelements 1 dient dabei vorzugsweise zur Zentrierung des Schweißelements 1 und zur zentrischen Zündung des Lichtbogens 10.

Fig. 4c zeigt, wie der Kernbereich 5 aufgrund des sich im Magnetfeld mit Bezug auf die Längsachse L spiralförmig bewegenden Lichtbogens 10 schmilzt, so dass sich ein erster bzw. Schweißelement-seitiger Schmelzbereich 11 bildet. Dieser erste Schmelzbereich 11 bildet sich zunächst lediglich durch geschmolzenes Material des Kernbereichs 5; dies entspricht dem oben genannten Schritt (ii). Seites des Trägerelements 2 bildet sich durch den Lichtbogen 10 ein zweiter bzw. Trägerelement-seitiger Schmelzbereich 12.

Wie in Fig. 4d skizziert, springt der Lichtbogen 10 anschließend - wie in Schritt (iii) angegeben mit Hilfe des Magnetfelds auf den Randbereich 4 über und schmilzt nun - im Sinn des Schritts (iv) - das Material des Schweißelements 1 in diesem Bereich an, sowie den entsprechend gegenüberliegenden Bereich des Trägerelements 2. Auf diese Weise vergrößern sich die beiden genannten Schmelzbereiche 11, 12 mit Bezug auf die Längsachse L in radialer Richtung. Mit anderen Worten nehmen ihre Durchmesser zu. Der Randbereich 4 wird also sozusagen in die Schweißung mit einbezogen.

Vorzugsweise umfasst das Verfahren weiterhin den weiteren Schritt: (v) Verbinden des Schweißelements 1 mit dem Trägerelement 2 durch eine Bewegung des Schweißelements 1 entlang der Längsachse L des Schweißelements 1, wobei eine, durch die Schritte (ii) und (iv) gebildete Schmelze in Richtung der Längsachse L betrachtet zumindest den Kernbereich 5 überdeckt und vorzugsweise auch zumindest einen überwiegenden Anteil des Randbereichs 4 überdeckt.

Dies ist beispielhaft in Fig. 4e anhand eines Eintauch- bzw. Fügevorgangs skizziert: Hierbei wird das Schweißelement 1 entlang seiner Längsachse L auf das Trägerelement 2 zu bewegt, wie durch einen Pfeil s' angedeutet. Der Schweißelementseitige Schmelzbereich 11 und der Trägerelement-seitige Schmelzbereich 12 vereinigen sich zu einer Schmelze 15 und der Lichtbogen 10 erlischt. Die Schmelze 15 überdeckt dabei in Richtung der Längsachse L betrachtet zumindest den Kernbereich 5. Im Weiteren wird die Schmelze 15 teilweise radial nach außen in einen Raumbereich 14 zwischen dem Randbereich 4 und dem Trägerelement 2 verlagert, so dass sie auch zumindest einen überwiegenden Anteil des Randbereichs 4 überdeckt, beispielsweise mindestens 90% des Randbereichs 4, vorzugsweise den gesamten Randbereich 4. Der Randbereich 4 wird sozusagen mit Schmelzmaterial "aufgefüllt". Auf diese Weise ist eine vollflächige Verbindung zwischen dem Schweißelement 1 und dem Trägerelement 2 ermöglicht. Nach Abkühlen und Erstarren des Materials der Schmelze 15 bildet dieses einen Schweißverbindungsbereich mit einem konkaven umlaufenden kerbfreien Schweißwulst 6. Dementsprechend weist das Verfahren weiterhin vorzugsweise außerdem den folgenden weiteren Schritt auf: (vi) Bilden eines umlaufenden konkav geformten Wulstes 6 zwischen dem Schweißelement 1 und dem Trägerelement 2. Fig. 4f zeigt den verschweißten Zustand.

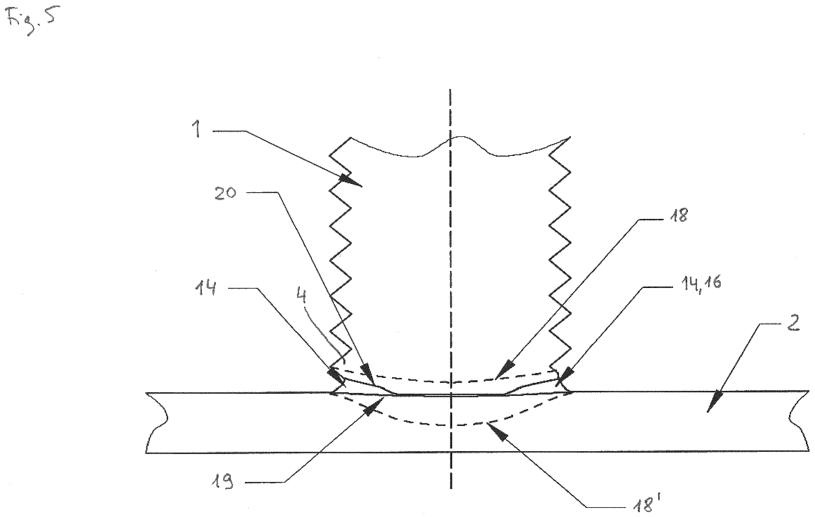

Fig. 5 zeigt ein schematisches Schliffbild einer durch ein anmeldungsgemäßes Verfahren erzeugten Schweißverbindung. Deutlich zu erkennen ist der Raumbereich 14 zwischen dem Randbereich 4 des Schweißelements 1 und dem Trägerelement 2, der mit dem aus der Schmelze entstandenen, erstarrten Material 16 gefüllt ist. Mit dem Bezugszeichen 19 ist die Grenze zwischen dem während des Schweißvorgangs geschmolzenen Bereich des Trägerelements 1 und dem nicht geschmolzenem Bereich des Trägerelements 1 angedeutet, mit dem Bezugszeichen 20 die entsprechende Grenze am Trägerelement 1. Das Bezugszeichen 18 bezeichnet die Begrenzung der Wärmeeinflusszone seitens des Schweißelements 1 und das Bezugszeichen 18' die Begrenzung der Wärmeeinflusszone seitens des Trägerelements 2.

Besonders gute Ergebnisse lassen sich erzielen, wenn der Kernbereich 5 einen Stirnflächenbereich 8 aufweist, der eine Kegelfläche beschreibt, deren Kegelwinkel α gemäß der Erfindung mindestens 175° beträgt.

Durch entsprechende Formgebung des Kernbereichs 5 lässt sich somit gezielt Einfluss auf die Schmelzmenge nehmen. Vorzugsweise ist die Gesamtschmelzmenge so gewählt, dass die Schmelze entlang der Längsachse L betrachtet sowohl den Kernbereich 4, als auch den Randbereich 4 überdeckt, sich jedoch im Wesentlichen nicht radial über den Randbereich 4 hinaus erstreckt. Da der Randbereich 4 angeschmolzen wird, ist eine vollflächige Verbindung zwischen dem Schweißelement 1 und dem Trägerelement 2 erzielbar.

Bei dem in Fig. 1 skizzierten Schweißelement 1 ist die Gestaltung derart, dass der Kernbereich 5 einen Durchmesser D1 aufweist und der Randbereich 4 einen Durchmesser D2, wobei der Durchmesser D1 des Kernbereichs 5 etwa 66% des Durchmessers D2 des Randbereichs 4 beträgt. Demzufolge beträgt die mit Bezug auf die Längsachse L normale Projektionsfläche des Kernbereichs 5 etwa 44% der entsprechenden Projektionsfläche von Kernbereich 5 und Randbereich 4 zusammen.

Allgemeiner formuliert beträgt gemäß der Erfindung der Durchmesser D1 des Kernbereichs 5 zwischen 60% und 95% des Durchmessers D2 des Randbereichs oder die normale Projektionsfläche des Kernbereichs 5 zwischen 40% und 90% der entsprechenden Projektionsfläche von Kernbereich 5 und Randbereich 4 zusammen.

Für die entlang der Längsachse L betrachtete Erstreckung H des Kernbereichs 5 - hier auch als "Höhe" des Kernbereichs 5 bezeichnet - ohne die Spitze 9 relativ zu dem Durchmesser D2 des Randbereichs 4 ist vorzugsweise vorgesehen, dass 0,5 D2 < H < 1,5 D2 gilt, vorzugsweise 0,7 D2 < H < 1,3 D2. Wenn H' die Höhe des Kernbereichs 5 einschließlich der Spitze 9 angibt, so bezeichnet h = H' - H die Höhe der Spitze 9; für Letztere gilt vorzugsweise 0,4 mm < h < 0,8 mm, besonders bevorzugt 0,5 mm < h < 0,7 mm.

Der Durchmesser des Spitze 9 kann beispielsweise kleiner als 10% des Durchmessers D1 des Kernbereichs 5 gewählt sein; absolut betrachtet kann der Durchmesser der Spitze kleiner als 1 mm gewählt sein.

Die Spitze 9 kann insbesondere zylinderförmig gestaltet sein, wobei die entsprechende Zylinderachse mit der Längsachse L des Schweißelements 1 zusammenfällt.

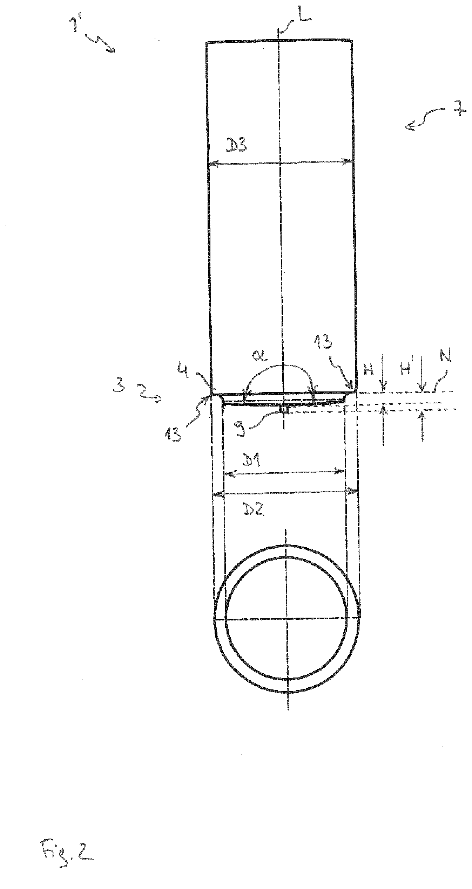

Fig. 2 zeigt in analoger Form zu Fig. 1 eine schematische Seitenansicht eines anmeldungsgemäßen Schweißelements 1' gemäß einem zweiten Ausführungsbeispiel in Form eines Stiftes. Die Bezugszeichen sind im Folgenden jeweils in analoger Form gebraucht. Der Durchmesser D1 des Kernbereichs 5 beträgt hier etwa 84% des Durchmessers D2 des Randbereichs 4 und dementsprechend die normale Projektionsfläche des Kernbereichs 5 etwa 70% der entsprechenden Projektionsfläche von Kernbereich 5 und Randbereich 4 zusammen.

Vorzugsweise ist der Randbereich 4 radial nach außen durch eine Außenkante 13 begrenzt, wobei sich der Kernbereich 5 gegenüber einem, durch die Außenkante 13 festgelegten Niveau N um mehr als 0,5 mm erhaben gestaltet ist, vorzugsweise um mehr als 0,8 mm. Das betreffende Maß ist die oben bereits erwähnte Erstreckung H' des Kernbereichs 5 inklusive der Spitze 9.

Wenn es sich bei dem Stift 1' beispielsweise um einen so genannten D12 Stift handelt, beträgt der Durchmesser D3 des Schaftes 12 mm; der Randbereich 4 erstreckt sich bei dem gezeigten Beispiel radial ebenso weit wie der Schaft des Stiftes 1', so dass dementsprechend der Durchmesser D2 des Randbereichs 4 ebenfalls 12 mm beträgt. Die Höhe H des Kernbereichs 5 ohne die Spitze 9 kann hierbei beispielsweise 0,9 mm betragen, also etwa 7,5% von D2 bzw. 0,075 D2; dies liegt also innerhalb der oben angegeben Grenzen für H. Die Spitze 9 kann dabei eine Höhe h von 0,5 mm aufweisen, so dass sich in diesem Fall für H' gleich 1,4 mm ergeben.

Allgemeiner formuliert kann das Schweißelement 1' einen, sich an den Schweißbereich 3 anschließenden Schaftbereich 7 aufweisen, wobei der Durchmesser D3 des Schaftbereichs 7 ebenso groß oder größer ist als der Durchmesser D2 des Randbereichs 4.

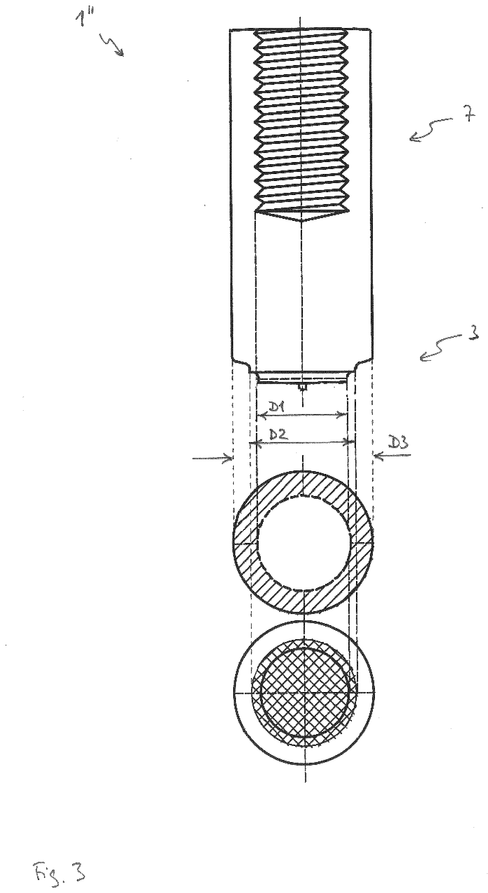

Fig. 3 zeigt in analoger Form zu Fig. 1 eine schematische Seitenansicht eines anmeldungsgemäßen Schweißelements 1" gemäß einem dritten Ausführungsbeispiel in Form einer Innengewindebuchse. Hier ist der Durchmesser D3 des Schaftbereichs 7 größer als der Durchmesser D2 des Randbereichs 4. Wie in der unteren der beiden zugehörigen Querschnittskizzen gezeigt, beträgt hier die normale Projektionsfläche des Kernbereichs 5 etwa 70% der entsprechenden Projektionsfläche von Kernbereich 5 und Randbereich 4 zusammen, also sozusagen 70% der "tragenden Fläche". Die Querschnittfläche π (D3/2)² des Schweißelements 1" im Bereich des Schaftes 7 kann also größer sein als der "tragende Nennquerschnitt" π (D2/2)².

Die mechanische Belastbarkeit der Innengewindebuchse 1" bestimmt sich aus der Gesamtfläche, also π (D3/2)² abzüglich der Gewindequerschnittfläche, die hier der normalen Projektionsfläche des Kernbereichs 5 entspricht, also π (D1/2)². Dies ist in der oberen der beiden zugehörigen Querschnittskizzen schraffiert skizziert. Mit anderen Worten lässt sich hier ein um 25% erhöhter Sicherheitsfaktor erzielen, indem ein Schweißverbindungsbereich mit einem Durchmesser gebildet wird, der entsprechend größer ist als der Nennquerschnitt.

In der Praxis ist der Schweißdurchmesser, also der Durchmesser des Schweißverbindungsbereichs auf Höhe der Oberfläche des Trägerelements 2 größer als der Durchmesser D3 des Nennquerschnitts des Schweißelements 1 bzw. 1' bzw. 1". Dies wird durch eine konkave Gestaltung des Schweißwulstes 6 bzw. der Schweißnaht 6 erreicht. Konkave Schweißnähte zeichnen sich durch eine hohe Festigkeit, insbesondere bei dynamischer Belastung aus. Durch den größeren Schweißquerschnitt auf Höhe des Trägerelements 2 entsteht zusätzlich eine höhere Sicherheit bei Belastung des Schweißelements. Durch eine entsprechend geeignete Steuerung des Verfahrens ist ein geschlossen umlaufender konkaver Schweißwulst 6 mit besonders guter Reproduzierbarkeit erzielbar. Hierzu können insbesondere der Schweißstrom, der Hub und die Rotation des Lichtbogens entsprechend gewählt werden. Eine unerwünschte Blaswirkung lässt sich verhindern.

Die Schweißung kann aufgrund des besonders geringen Schmelzvolumens in allen Schweißpositionen ausgeführt werden, also insbesondere auch auf vertikale Flächen und in Überkopfposition.

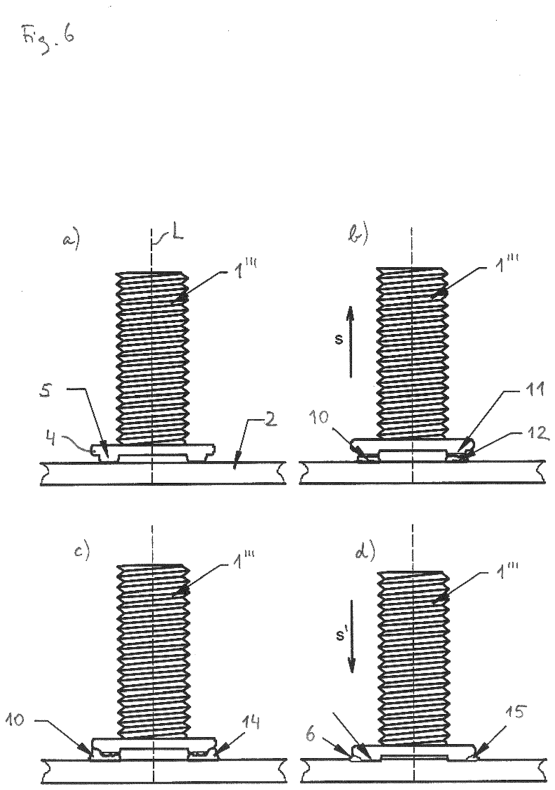

Das anmeldungsgemäße Verfahren kann auch für eine nicht-vollflächige Verschweißung angewendet werden, wie beispielhaft in den Figuren 6a bis 6d skizziert. Fig. 6a zeigt ein entsprechendes Schweißelement 1"' auf einem Trägerelement 2. In Fig. 6b ist skizziert, wie der Kernbereich 5, der hier ringförmig gestaltet ist, nach Abhub des Schweißelements 1"' durch den Lichtbogen 10 angeschmolzen wird. Hier bildet sich - analog zu oben - entsprechend ein Schweißelement-seitiger Schmelzbereich 11 und ein Trägerelement-seitiger Schmelzbereich 12. Fig. 6c zeigt den auf den Randbereich 4 übergesprungenen Lichtbogen 10, der sich nun im Raumbereich 14 zwischen dem Randbereich 4 und dem Trägerelement 2 befindet und die Anschmelzung des Randbereichs 4 und des entsprechend gegenüberliegenden Bereichs des Trägerelements 2 bewirkt. Fig. 6d zeigt den Eintauchvorgang mit der teilweisen Verlagerung des Schmelzmaterials 15 radial nach außen in den Raumbereich 14. Auch hier wird also der Randbereich 4 sozusagen mit Schmelzmaterial "aufgefüllt". Durch das anschließend erstarrte Schmelzmaterial bildet sich ein Schweißverbindungsbereich mit einem konkaven umlaufenden kerbfreien Schweißwulst 6.

Das Verfahren eignet sich daher auch in einem Fall, in dem keine vollflächige Verschweißung erzielt werden soll und lediglich eine kerbfreie umlaufend konkave Schweißnaht erzeugt werden soll.

Bei dem hier gezeigten Schweißelement 1"' ist der Kernbereich 5 also nicht kreisförmig, sondern ringförmig gestaltet. Allgemeiner ist das Verfahren auch zur Erzeugung von Schweißverbindungen mit nicht-vollflächig verschweißten, hohlrotationssymmetrischen Schweißelementen anwendbar.

Eine solche nicht-vollflächige Verschweißung kann beispielsweise bei erhöhten hygienischen Anforderungen erwünscht sein, wie beispielsweise bei Geschirrspülern oder Anlagen in der Lebensmittelindustrie oder bei medizinischen Geräten. Als weitere mögliche Anwendungen kommen beispielsweise Verbindungen für hohe dynamische Langzeitbelastungen in Betracht. Kerbfreie und auch konkave Schweißnähte eignen sich für derartige Anwendungen in besonderem Maße.

Durch den gegenüber dem Volldurchmesser des Schweißelements deutlichen kleineren Durchmesser des Kernbereichs ist für die Anschmelzung des Kernbereichs ein besonders kleiner Strom ausreichend. Daher lässt sich das anmeldungsgemäße Schweißverfahren mit besonders kleinem Schweißstrom durchführen und bei vergleichsweise langer Schweißzeit. Hierdurch lässt sich auch durch eine längere Vorwärmung des Trägerelements und des Schweißelements eine erhöhte kritische Aufhärtung der Schweißzone vermeiden. Es lassen sich Schweißstromstärken verwenden, die deutlich kleiner sind als in entsprechenden aktuellen Empfehlungen für das Bolzenschweißen bei industriellen Anwendungen angegeben und es lassen sich Schweißzeiten verwenden, die deutlich länger sind als in entsprechenden Empfehlungen angegeben.

Insbesondere aufgrund der besonders geringen Menge an Schmelze eignet sich das Verfahren dafür, in allen Schweißpositionen angewendet zu werden, also insbesondere auch auf vertikalen Flächen und in Überkopfposition.

Durch eine vollflächige Anschmelzung von Bereichen des Trägerelements und des Schweißelements außerhalb des Kernbereichs bis zum Volldurchmesser wird die Möglichkeit geschaffen, diesen Bereich mit "überschüssiger" Schmelze aufzufüllen und vollflächig anzubinden. Die Belastbarkeit des Schweißelements wird aus der Summe der verbundenen Flächen im Kernbereich und im Randbereich gebildet. So lassen sich mit dem anmeldungsgemäßen Verfahren Schweißverbindungen mit besonders hoher Reproduzierbarkeit erzielen.

Aufgrund des besonders geringen Stroms eignet sich das Verfahren zur Durchführung mit Hilfe von besonders kleinen und leichten Stromquellen. Dies ist insbesondere vorteilhaft für teil- oder vollautarke Anwendungen - überwiegend im Montagebereich. Autarke Geräte ermöglichen außerdem einen besonders guten elektrischen Schutz der schweißenden Person, insbesondere bei Schweißarbeiten in geschlossenen leitfähigen Behältern oder Anlageteilen. Mit entsprechend kleinen und leichten Stromquellen sind damit hochwertige Verschweißungen auch von großen Bolzendurchmessern und auch bei Montagebedingungen mit erhöhter elektrischer Gefährdung ermöglicht. Entsprechende Stromquellen mit einem internen Energiespeicher sind damit wirtschaftlich ausführbar und bieten viele Vorteile für einen Anwender.

## Patentansprüche

1. Verfahren zur Durchführung eines Schweißvorgangs zum Verschweißen eines Schweißelements (1) mit einem Trägerelement (2) nach dem Prinzip der Hubzündung unter Verwendung eines, durch Erzeugen eines Magnetfelds bewegten Lichtbogens,
wobei das Schweißelement (1) einen Schweißbereich (3) aufweist, der einen ringförmigen Randbereich (4) umfasst, sowie einen, von dem Randbereich (4) umgrenzten und gegenüber dem Randbereich (4) strukturell abgegrenzt und erhaben gestalteten Kernbereich (5),
**dadurch gekennzeichnet dass** :
der Kernbereich (5) einen Durchmesser (D1) aufweist und der Randbereich (4) einen Durchmesser (D2), wobei der Durchmesser (D1) des Kernbereichs (5) zwischen 60% und 95% des Durchmessers (D2) des Randbereichs (4) beträgt,
und weiter **gekennzeichnet durch** die folgenden Schritte:
(i) Erzeugen des Lichtbogens zwischen dem Kernbereich (5) und dem Trägerelement (2),
(ii) Schmelzen zumindest eines überwiegenden Teils des Kernbereichs (5),
(iii) Bewegen des Lichtbogens mit Hilfe des Magnetfelds auf den Randbereich (4),
(iv) Schmelzen zumindest eines Teils des Randbereichs (4).

2. Verfahren nach Anspruch 1,
**gekennzeichnet durch**
den weiteren Schritt:
(v) Verbinden des Schweißelements (1) mit dem Trägerelement (2) durch eine Bewegung des Schweißelements (1) entlang einer Längsachse (L) des Schweißelements (1), wobei eine, durch die Schritte (ii) und (iv) gebildete Schmelze in Richtung der Längsachse (L) betrachtet zumindest den Kernbereich (5) überdeckt.

3. Verfahren nach Anspruch 2,
**dadurch gekennzeichnet,**
**dass** die Schmelze dabei auch zumindest einen überwiegenden Anteil des Randbereichs (4) überdeckt.

4. Verfahren nach einem der vorhergehenden Ansprüche,
**gekennzeichnet durch**
den weiteren Schritt
(vi) Bilden eines umlaufenden konkav geformten Wulstes (6) zwischen dem Schweißelement (1) und dem Trägerelement (2).

5. Verfahren nach einem der vorhergehenden Ansprüche,
**dadurch gekennzeichnet,**
**dass** das Verfahren unter Zuführung eines Schutzgases durchgeführt wird.

6. Verfahren nach einem der vorhergehenden Ansprüche,
**dadurch gekennzeichnet,**
**dass** das Schweißelement (1) einen, sich an den Schweißbereich (3) anschließenden Schaftbereich (7) aufweist, wobei ein Durchmesser (D3) des Schaftbereichs (7) ebenso groß oder größer ist als der Durchmesser (D2) des Randbereichs (4).

7. Verfahren nach einem der vorhergehenden Ansprüche,
**dadurch gekennzeichnet,**
**dass** der Kernbereich (5) einen Stirnflächenbereich (8) aufweist, der eine Kegelfläche beschreibt, deren Kegelwinkel (α) vorzugsweise mindestens 175° beträgt.

8. Verfahren nach einem der vorhergehenden Ansprüche,
**dadurch gekennzeichnet,**
**dass** der Kernbereich (5) eine Spitze (9) zur zentrischen Zündung des Lichtbogens aufweist.

9. Verfahren nach einem der vorhergehenden Ansprüche,
**dadurch gekennzeichnet,**
**dass** der Randbereich (4) radial nach außen durch eine Außenkante (13) begrenzt ist, wobei sich der Kernbereich (5) gegenüber einem, durch die Außenkante (13) festgelegten Niveau (N) um mehr als 0,5 mm erhaben gestaltet ist, vorzugsweise um mehr als 0,8 mm.

10. Verfahren nach einem der vorhergehenden Ansprüche,
**dadurch gekennzeichnet,**
**dass** der Kernbereich (5) ringförmig gestaltet ist.

11. Schweißelement (1) zur Durchführung eines Schweißvorgangs zum Verschweißen des Schweißelements (1) mit einem Trägerelement (2) nach dem Prinzip der Hubzündung unter Verwendung eines magnetisch bewegten Lichtbogens, insbesondere zur Durchführung eines Verfahrens nach einem der vorhergehenden Ansprüche, aufweisend
- einen Schweißbereich (3) mit einem ringförmigen Randbereich (4) und einem, von dem Randbereich (4) umgrenzten und gegenüber dem Randbereich (4) strukturell abgegrenzt und erhaben gestalteten Kernbereich (5),
dadurch gekennzeichnent, dass
der Kernbereich (5) einen Durchmesser (D1) aufweist und der Randbereich (4) einen Durchmesser (D2), wobei der Durchmesser (D1) des Kernbereichs (5) zwischen 60% und 95% des Durchmessers (D2) des Randbereichs (4) beträgt,
wobei der Kernbereich (5) einen Stirnflächenbereich (8) aufweist, der eine Kegelfläche beschreibt, deren Kegelwinkel (α) mindestens 175° beträgt.

12. Schweißelement nach Anspruch 11,
**dadurch gekennzeichnet,**
**dass** das Schweißelement (1) einen, sich an den Schweißbereich (3) anschließenden Schaftbereich (7) aufweist, wobei ein Durchmesser (D3) des Schaftbereichs (7) ebenso groß oder größer ist als der Durchmesser (D2) des Randbereichs (4).

13. Schweißelement nach Anspruch 11 oder 12,
**dadurch gekennzeichnet,**
**dass** der Kernbereich (5) eine Spitze (9) zur zentrischen Zündung des Lichtbogens aufweist.

14. Schweißelement nach einem der Ansprüche 11 bis 13,
**dadurch gekennzeichnet,**
**dass** der Randbereich (4) radial nach außen durch eine Außenkante (13) begrenzt ist, wobei sich der Kernbereich (5) gegenüber einem, durch die Außenkante (13) festgelegten Niveau (N) um mehr als 0,5 mm erhaben gestaltet ist, vorzugsweise um mehr als 0,8 mm.

## Claims

1. Method for performing a welding operation for fusing a welding element (1) to a carrier element (2) in accordance with the principle of drawn-arc ignition using an arc moved by generating a magnetic field, wherein the welding element (1) has a welding region (3), which comprises an annular peripheral region (4), and a core region (5) bounded by the peripheral region (4) and of structurally delimited and raised configuration with respect to the peripheral region (4),
**characterized in that**:
the core region (5) has a diameter (D1) and the peripheral region (4) has a diameter (D2), wherein the diameter (D1) of the core region (5) amounts to between 60% and 95% of the diameter (D2) of the peripheral region (4),
and further **characterized by** the following steps:
(i) generating the arc between the core region (5) and the carrier element (2),
(ii) melting at least a predominant part of the core region (5),
(iii) moving the arc onto the peripheral region (4) by means of the magnetic field,
(iv) melting at least part of the peripheral region (4) .

2. Method according to Claim 1,
**characterized by**
the further step of:
(v) connecting the welding element (1) to the carrier element (2) by moving the welding element (1) along a longitudinal axis (L) of the welding element (1), wherein a melt formed by steps (ii) and (iv) covers at least the core region (5) as viewed in the direction of the longitudinal axis (L).

3. Method according to Claim 2,
**characterized in that**
in the process, the melt also covers at least a predominant proportion of the peripheral region (4).

4. Method according to one of the preceding claims,
**characterized by**
the further step of:
(vi) forming an encircling, concavely formed bead (6) between the welding element (1) and the carrier element (2).

5. Method according to one of the preceding claims,
**characterized in that**
the method is performed with the supply of a shielding gas.

6. Method according to one of the preceding claims,
**characterized in that**
the welding element (1) has a shank region (7) adjoining the welding region (3), wherein a diameter (D3) of the shank region (7) is of the same magnitude as or is larger than the diameter (D2) of the peripheral region (4).

7. Method according to one of the preceding claims,
**characterized in that**
the core region (5) has an end-face region (8) describing a conical face, the cone angle (α) of which preferably amounts to at least 175°.

8. Method according to one of the preceding claims,
**characterized in that**
the core region (5) has a tip (9) for the central ignition of the arc.

9. Method according to one of the preceding claims,
**characterized in that**
the peripheral region (4) is delimited radially outwardly by an outer edge (13), wherein the core region (5) is of a configuration raised by more than 0.5 mm, preferably by more than 0.8 mm, with respect to a level (N) determined by the outer edge (13).

10. Method according to one of the preceding claims,
**characterized in that**
the core region (5) is of annular configuration.

11. Welding element (1) for performing a welding operation for fusing the welding element (1) to a carrier element (2) in accordance with the principle of drawn-arc ignition using a magnetically moved arc, in particular for performing a method according to one of the preceding claims, having
- a welding region (3) with an annular peripheral region (4) and with a core region (5) bounded by the peripheral region (4) and of structurally delimited and raised configuration with respect to the peripheral region (4),
**characterized in that**
the core region (5) has a diameter (D1) and the peripheral region (4) has a diameter (D2), wherein the diameter (D1) of the core region (5) amounts to between 60% and 95% of the diameter (D2) of the peripheral region (4),
wherein the core region (5) has an end-face region (8) describing a conical face, the cone angle (α) of which amounts to at least 175°.

12. Welding element according to Claim 11,
**characterized in that**
the welding element (1) has a shank region (7) adjoining the welding region (3), wherein a diameter (D3) of the shank region (7) is of the same magnitude as or is larger than the diameter (D2) of the peripheral region (4).

13. Welding element according to Claim 11 or 12,
**characterized in that**
the core region (5) has a tip (9) for the central ignition of the arc.

14. Welding element according to one of Claims 11 to 13,
**characterized in that**
the peripheral region (4) is delimited radially outwardly by an outer edge (13), wherein the core region (5) is of a configuration raised by more than 0.5 mm, preferably by more than 0.8 mm, with respect to a level (N) determined by the outer edge (13).

## Revendications

1. Procédé pour mettre en œuvre une opération de soudage pour souder un élément de soudure (1) à un élément porteur (2) selon le principe de l'arc tiré en utilisant un arc électrique déplacé par génération d'un champ magnétique,
l'élément de soudure (1) présentant une région de soudure (3) qui comprend une région de bord de forme annulaire (4) ainsi qu'une région de noyau (5) entourée par la région de bord (4) et configurée de manière délimitée structurellement et de manière rehaussée par rapport à la région de bord (4),
**caractérisé en ce que**
la région de noyau (5) présente un diamètre (D1) et la région de bord (4) présente un diamètre (D2), le diamètre (D1) de la région de noyau (5) étant compris entre 60 % et 95 % du diamètre (D2) de la région de bord (4),
et **caractérisé en outre par** les étapes suivantes :
(i) génération de l'arc électrique entre la région de noyau (5) et l'élément porteur (2),
(ii) fusion d'au moins une majeure partie de la région de noyau (5),
(iii) déplacement de l'arc électrique à l'aide du champ magnétique sur la région de bord (4),
(iv) fusion d'au moins une partie de la région de bord (4).

2. Procédé selon la revendication 1,
**caractérisé par**
l'étape supplémentaire suivante :
(v) connexion de l'élément de soudure (1) à l'élément porteur (2) par un déplacement de l'élément de soudure (1) le long d'un axe longitudinal (L) de l'élément de soudure (1), une matière en fusion formée par les étapes (ii) et (iv), vu dans la direction de l'axe longitudinal (L), recouvrant au moins la région de noyau (5).

3. Procédé selon la revendication 2,
**caractérisé en ce que**
la matière en fusion recouvre en l'occurrence également au moins une majeure partie de la région de bord (4).

4. Procédé selon l'une quelconque des revendications précédentes,
**caractérisé par**
l'étape supplémentaire suivante :
(vi) formation d'un bourrelet périphérique (6) de forme concave entre l'élément de soudure (1) et l'élément porteur (2).

5. Procédé selon l'une quelconque des revendications précédentes,
**caractérisé en ce que**
le procédé est mis en œuvre avec apport d'un gaz protecteur.

6. Procédé selon l'une quelconque des revendications précédentes,
**caractérisé en ce que**
l'élément de soudure (1) présente une région d'arbre (7) se raccordant à la région de soudure (3), un diamètre (D3) de la région d'arbre (7) étant aussi grand ou plus grand que le diamètre (D2) de la région de bord (4).

7. Procédé selon l'une quelconque des revendications précédentes,
**caractérisé en ce que**
la région de noyau (5) présente une région de surface frontale (8) qui décrit une surface conique dont l'angle de conicité (α) vaut de préférence au moins 175°.

8. Procédé selon l'une quelconque des revendications précédentes,
**caractérisé en ce que**
la région de noyau (5) présente une pointe (9) pour l'allumage centré de l'arc électrique.

9. Procédé selon l'une quelconque des revendications précédentes,
**caractérisé en ce que**
la région de bord (4) est délimitée radialement vers l'extérieur par une arête extérieure (13), la région de noyau (5) étant configurée de manière rehaussée de plus de 0,5 mm, de préférence de plus de 0,8 mm, par rapport à un niveau (N) fixé par l'arête extérieure (13).

10. Procédé selon l'une quelconque des revendications précédentes,
**caractérisé en ce que**
la région de noyau (5) est configurée sous forme annulaire.

11. Élément de soudure (1) pour mettre en œuvre une opération de soudage pour souder l'élément de soudure (1) à un élément porteur (2) selon le principe de l'arc tiré en utilisant un arc électrique déplacé magnétiquement, en particulier pour mettre en œuvre un procédé selon l'une quelconque des revendications précédentes, présentant
- une région de soudure (3) avec une région de bord de forme annulaire (4) et une région de noyau (5) entourée par la région de bord (4) et configurée de manière délimitée structurellement et de manière rehaussée par rapport à la région de bord (4),
**caractérisé en ce que**
la région de noyau (5) présente un diamètre (D1) et la région de bord (4) présente un diamètre (D2), le diamètre (D1) de la région de noyau (5) étant compris entre 60 % et 95 % du diamètre (D2) de la région de bord (4),
la région de noyau (5) présentant une région de surface frontale (8) qui décrit une surface conique dont l'angle de conicité (α) vaut de préférence au moins 175°.

12. Élément de soudure selon la revendication 11,
**caractérisé en ce que**
l'élément de soudure (1) présente une région d'arbre (7) se raccordant à la région de soudure (3), un diamètre (D3) de la région d'arbre (7) étant aussi grand ou plus grand que le diamètre (D2) de la région de bord (4).

13. Élément de soudure selon la revendication 11 ou 12,
**caractérisé en ce que**
la région de noyau (5) présente une pointe (9) pour l'allumage centré de l'arc électrique.

14. Élément de soudure selon l'une quelconque des revendications 11 à 13,
**caractérisé en ce que**
la région de bord (4) est délimitée radialement vers l'extérieur par une arête extérieure (13), la région de noyau (5) étant configurée de manière rehaussée de plus de 0,5 mm, de préférence de plus de 0,8 mm, par rapport à un niveau (N) fixé par l'arête extérieure (13).
